# EUROPÄISCHE PATENTSCHRIFT

(11) **EP 2 004 962 B1**
(45) Veröffentlichungstag und Bekanntmachung des Hinweises auf die Patenterteilung: **23.12.2009**
(21) Anmeldenummer: 07727708.5
(22) Anmeldetag: 03.04.2007
(51) Int. Cl.: F01N 3/025, F01N 9/00

(54) **VORRICHTUNG UND VERFAHREN ZUR ERZEUGUNG VON HEISSGAS UND DIESELPARTIKELFILTERSYSTEM**
DEVICE AND METHOD FOR PRODUCING HOT GAS AND DIESEL PARTICULATE FILTER SYSTEM
DISPOSITIF ET PROCEDE DE PRODUCTION DE GAZ CHAUD ET SYSTEME DE FILTRATION DE PARTICULES DIESEL

(30) Priorität: 03.04.2006 DE 102006015841
(43) Veröffentlichungstag der Anmeldung: 24.12.2008
(73) Patentinhaber: Twk Engineering Entwicklungstechnik Gbr, 56422 Wirges (DE)
(72) Erfinder: WINTER, Thomas, 56244 Oetzingen (DE); KARSTEN, Waldemar, 56422 Wirges (DE)
(74) Vertreter: Richardt, Markus Albert
(86) Internationale Anmeldenummer: PCT/EP2007/053237
(87) Internationale Veröffentlichungsnummer: WO 2007/113298

(56) Entgegenhaltungen:
- EP-A1- 0 367 280
- EP-A1- 0 532 030
- US-A- 4 541 239
- US-A- 4 662 172

## Beschreibung

Die Erfindung betrifft eine Vorrichtung und ein Verfahren zur Erzeugung von Heißgas, insbesondere zur Regeneration von Partikelfiltern, und ein Dieselpartikelfiltersystem.

In einem Dieselmotor erfolgt die Verbrennung des Dieselkraftstoffs durch Selbstentzündung eines heterogenen Luft-Kraftstoffgemischs. Bei der unvollkommenen Verbrennung kommt es infolge von Sauerstoffmangel zur Partikelbildung. Die Partikel bestehen hauptsächlich aus Kohlenstoff (Ruß), Sulfaten und unvollständig verbrannten Kohlenwasserstoffen (HC). Zur Ausfilterung solcher Partikel sind Dieselpartikelfilter aus dem Stand der Technik bekannt.

Bei Verwendung eines Dieselpartikelfilters steigt im allgemeinen mit zunehmender Filterbeladung der Abgasgegendruck. Da die Überschreitung des zulässigen Abgasgegendruckes vom Motorhersteller nicht erlaubt ist und eine Wartung im Sinne einer Filterentleerung vom Kunden nicht erwünscht ist, ist eine passive oder aktive Regenerierung des Filters zwingend erforderlich.

Unter aktiven Dieselpartikelfiltersystemen versteht man "Elektrisch regenerierende Systeme" oder "Brennergestützte Systeme" die manuell oder durch eine Steuerung oder Regelung, ausgehend von einer Überwachung des Abgasgegendruckes, aktiv ausgelöst werden.

Nach dem Stand der Technik sind Brenner, bei denen über eine Düse mit kleiner Öffnung zur Zerstäubung des Kraftstoffes in einen Brennraum, wobei der Kraftstoff mit der notwendigen Verbrennungsluft vermischt wird, üblich. Nachteilig hierbei ist, dass die feine Zerstäubungsöffnung der Düse schnell durch Verbrennungsrückstände, wie sie z. B. beim Abschalten des Brenners entstehen, verkokt und so Störungen im Betrieb des Brenners entstehen können.

Solche Brenner für Dieselpartikelfilter sind u.a. bekannt aus DE 42 29 103 A1, DE 35 45 437, DE 42 43 035 A1, DE 101 30 338 A1, DE 101 38 111 A1, DE 102 04 073 A1, DE 198 10 738 C1, DE 3729861 A1, US 4,541,239, DE 200 23 560 U1, DE 100 05 376 A1, DE 3545437 A1.

Aus der DE 37 34 197 A1, von der die vorliegende Erfindung als nächstkommendem Stand der Technik ausgeht, ist auch bereits ein regelbarer Brenner bekannt.

Der vorliegenden Erfindung liegt dem gegenüber die Aufgabe zu Grunde, eine verbesserte Vorrichtung und ein Verfahren zur Erzeugung von Heißgas, insbesondere zur Regeneration von Partikelfiltern, und ein Dieselpartikelfiltersystem zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Nach Ausführungsformen der Erfindung wird eine Vorrichtung zur Erzeugung von Heißgas mit einem ersten Brennraum zum Verbrennen von Kraftstoff, wobei der erste Brennraum ein offenes und ein geschlossenes Ende aufweist, einem zweiten Brennraum, der den ersten Brennraum einhüllt, wobei der zweite Brennraum eine Austrittsöffnung für das Heißgas aufweist, die gegenüber dem geschlossenen Ende des ersten Brennraums angeordnet ist, geschaffen.

Die Erfindung ermöglicht insbesondere die Schaffung eines Brenners für einen Dieselpartikelfilter, der bei einer relativ kleinen Bauform eine relativ große Leistung aufweist. Dies wird durch die Anordnung des ersten Brennraums im Inneren des zweiten Brennraums ermöglicht.

Nach einer Ausführungsform der Erfindung ist der erste Brennraum zum Verbrennen des Kraftstoffs unter Sauerstoffmangel ausgebildet. Den ersten Brennraum wird also ein Kraftstoff-Luft-Gemisch mit einem Luftverhältnis von λ < 1 zugeführt, das heißt ein Kraftstoff-Luft-Gemisch mit einem Kraftstoffüberschuss, was auch als "fettes Gemisch" bezeichnet wird.

Nach einer Ausführungsform der Erfindung werden die ersten und zweiten Brennräume durch zwei ineinander angeordnete Rohrabschnitte gebildet. In diesem Fall wird der erste Brennraum von dem zweiten Brennraum vollständig eingehüllt.

Nach einer Ausführungsform der Erfindung wird in dem zweiten Brennraum ein Luftstrom erzeugt, der in Richtung auf die Austrittsöffnung des zweiten Brennraums für das Heißgas verläuft. Vorzugsweise hat der Luftstrom einen Drall, so dass der Luftstrom in etwa spiralförmig entlang der Innenseite einer Außenwandung des zweiten Brennraums verläuft. Dadurch wird die Außenwandung des zweiten Brennraums gekühlt, so dass die Temperatur der Außenwandung eine Betriebstemperatur von zum Beispiel nicht mehr als 300°C erreicht.

Nach einer Ausführungsform der Erfindung wird der Luftstrom in dem zweiten Brennraum durch eine exzentrisch versetzt angeordnete Luftzuführung erzeugt. Die Luftzuführung mündet beispielsweise zwischen dem offenen Ende des ersten Brennraums und dem geschlossenen Ende des zweiten Brennraums in den zweiten Brennraum. Aus dem ersten Brennraum in dem zweiten Brennraum strömendes Brenngas wird von der Luftzuführung erfasst, ohne sich mit ihr vollständig zu vermischen, so dass das Brenngas dem Luftstrom folgend in etwa entlang einer Spiralbahn auf die Austrittsöffnung hin transportiert wird.

Nach einer Ausführungsform der Erfindung hat die Vorrichtung eine Ummantelung, durch die hindurch die Verbrennungsluft zugeführt wird. Dies hat den Vorteil, dass damit eine besonders kühle Aussenwandung erreichbar ist.

Nach einer Ausführungsform der Erfindung hat der Luftstrom einen Drall, der in der Ebene der Zuführung von Brenngas von dem ersten Brennraum in den zweiten Brennraum verläuft. Beispielsweise ist die Vorrichtung hierzu nierenförmig ausgebildet. Diese Ausführungsform hat den Vorteil, dass sie besonders kompakt und mit geringem Aufwand herstellbar ist.

Nach einer Ausführungsform der Erfindung weist die Vorrichtung eine Kraftstoffzuführung auf, die durch den zweiten Brennraum hindurch zu dem ersten Brennraum hin verläuft. Die Kraftstoffzuführung mündet vorzugsweise in Nähe des geschlossenen Endes des ersten Brennraums in den ersten Brennraum. Durch die Kraftstoffzuführung kann der erste Brennraum in dem zweiten Brennraum gehalten werden.

Nach einer Ausführungsform der Erfindung verläuft der Luftstrom in dem zweiten Brennraum so, dass zumindest ein Teil des Luftstroms auf die durch den zweiten Brennraum hindurch verlaufende Kraftstoffzuführung trifft. Dadurch wird die Kraftstoffzuführung gekühlt, um ein Abschmelzen der Kraftstoffzuführung zu vermeiden. Ferner erfolgt durch das Auftreffen eines Teils des Luftstroms und des Brenngases auf der Kraftstoffzuführung eine Verwirbelung und dadurch eine im wesentlichen vollständige Verbrennung des in dem Brenngas beinhalteten Kraftstoffüberschusses. Hierdurch kann ein Heißgas von zum Beispiel bis zu 1400°C erzeugt werden, wobei die Temperatur des Heißgases zum Beispiel über die Regelung der Kraftstoffzufuhr einstellbar sein kann.

Nach einer Ausführungsform der Erfindung befindet sich in der Kraftstoffzuführung eine Glühkerze, insbesondere eine Flammglühkerze. Durch die Glühkerze wird der Kraftstoff verdampft. Im Bereich der Glühkerze ist ein Mischraum gebildet, um den Kraftstoff mit Luft zu vermischen.

Nach einer Ausführungsform der Erfindung ist in dem ersten Brennraum ein Gestrick angeordnet. Das Gestrick dient zur Aufnahme von Kraftstofftropfen, die sich aufgrund des Leidenfrost-Effekts in dem ersten Brennraum befinden können. Durch das Gestrick wird vermieden, dass solche Kraftstofftropfen aus dem ersten Brennraum in den zweiten Brennraum gelangen können. Bei dem Gestrick kann es sich beispielsweise um ein Platin beschichtetes Drahtgestrick handeln.

Nach einer Ausführungsform der Erfindung befindet sich an der Austrittsöffnung für das Heißgas ein Anschlussflansch, der in die Strömung der Verbrennungsluft und des Brenngases hineinragt, um diese zu verwirbeln.

In einem weiteren Aspekt betrifft die Erfindung ein Verfahren zur Erzeugung von Heißgas mit folgenden Schritten: Verbrennung von Kraftstoff unter Sauerstoffmangel in einem ersten Brennraum, Austritt von Brenngas aus dem ersten Brennraum in einen zweiten Brennraum in eine erste Richtung, Erzeugung eines Luftstroms in dem zweiten Brennraum in Richtung auf eine Austrittsöffnung für das Heißgas des zweiten Brennraums, wobei die zweite Richtung der ersten Richtung gegenläufig ist.

Gemäß einer Ausführungsform des erfindungsgemäßen Verfahrens werden Mittel zum Entzünden des Kraftstoff-Luftgemischs nach einer Startphase abgeschaltet. Während der Startphase wird nämlich der erste Brennraum soweit erhitzt, dass die Mittel zum Entzünden nicht mehr benötigt werden, um den Brennvorgang in dem ersten Brennraum aufrecht zu erhalten. Wenn die Mittel zum Entzünden beispielsweise eine Flammglühkerze aufweisen, so hat dies den besonderen Vorteil, dass diese nach der Startphase nicht mehr mit elektrischer Energie versorgt werden muss.

Nach einer weiteren Ausführungsform der Erfindung wird zur Beendigung des Brennvorgangs zunächst die Glühkerze wieder eingeschaltet. Dadurch wird die Flammfront in dem ersten Brennraum in Richtung auf die Mündung der Kraftstoffzuführung hinein gezogen. Ferner wird die Temperatur des Drahtgestricks erhöht. Danach wird die Zuführung des Kraftstoffs abgeschaltet und Luft in die Kraftstoffzuführung eingeblasen. Dadurch werden Kraftstoffreste in den ersten Brennraum geblasen und dort verbrannt, so dass eventuell vorhandene Rußbeläge und Verkokungen beseitigt werden.

In einem weiteren Aspekt betrifft die Erfindung ein Dieselpartikelfiltersystem mit einem Partikelfilter und einer erfindungsgemäßen Vorrichtung zur Erzeugung von Heißgas. Zur Regeneration des Partikelfilters wird dieser mit dem Heißgas beaufschlagt. Dies kann während des laufenden Betriebs, das heißt "Online", erfolgen, oder bei abgeschaltetem Motor.

Nach einer Ausführungsform der Erfindung wird die Temperatur des Heißgases gemessen. Mit der Temperatur als Regelgröße wird die Kraftstoffzufuhr geregelt. Dies ist vorteilhaft, um Beschädigungen des Partikelfilters durch zu heißes Heißgas zu vermeiden.

Im weiteren werden Ausführungsformen der Erfindung mit Bezugnahme auf die Zeichnungen näher erläutert. Es zeigen:
- Figur 1: einen schematischen Längsschnitt durch eine Ausführungsform einer erfindungsgemäßen Vorrichtung,
- Figur 2: einen schematischen Querschnitt durch die Ausführungsform der Figur 1 im Bereich der Luftzuführung,
- Figur 3: ein Blockdiagramm einer Ausführungsform eines erfindungsgemäßen Dieselpartikelfiltersystems,
- Figur 4: ein Flussdiagramm einer Ausführungsform eines erfindungsgemäßen Verfahrens,
- Figur 5: ein Flussdiagramm einer weiteren Ausführungsform eines erfindungsgemäßen Verfahrens,
- Figur 6: eine Ausführungsform eines Signalplans zur Ansteuerung einer Ausführungsform einer erfindungsgemäßen Vorrichtung,
- Figur 7: einen schematischen Längsschnitt durch eine weitere Ausführungsform einer erfindungsgemäßen Vorrichtung mit einer Ummantelung,
- Figur 8: einen schematischen Längsschnitt durch eine weitere Ausführungsform einer erfindungsgemäßen Vorrichtung,
- Figur 9: eine perspektivische Ansicht der Ausführungsform der Fig. 8,
- Figur 10: einen Längsschnitt einer weiteren Ausführungsform mit einem integrierten Partikelfilter,
- Figur 11: einen Querschnitt der Ausführungsform der Figur 10,
- Figur 12: eine perspektivische Ansicht der Ausführungsform der Figuren 10 und 11.

Elemente der nachfolgenden Ausführungsformen, die einander entsprechen, sind mit denselben Bezugszeichen gekennzeichnet.

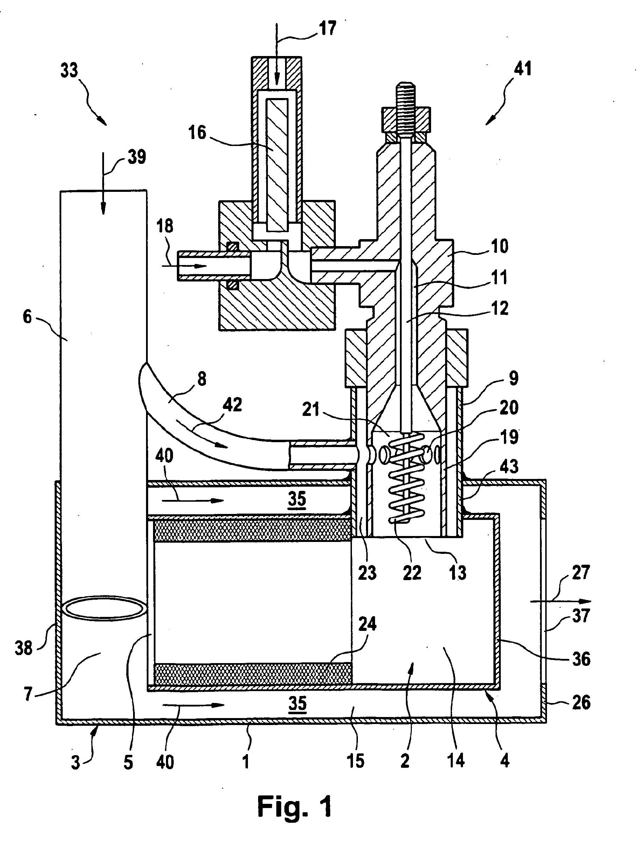

Die Figur 1 zeigt eine Ausführungsform einer erfindungsgemäßen Vorrichtung zur Erzeugung von Heißgas, das heißt einen Brenner 33. Der Brenner 33 hat einen ersten Brennraum 2 und einen zweiten Brennraum 35. Der Brennraum 2 hat ein offenes Ende 5 und ein geschlossenes Ende 36.

Der zweite Brennraum 35 hüllt den ersten Brennraum 2 in der hier betrachteten Ausführungsform vollständig ein. Der zweite Brennraum 35 hat eine Austrittsöffnung 37 für das Heißgas 27. Die Austrittsöffnung 37 des zweiten Brennraums 35 ist gegenüber dem geschlossenen Ende 36 des ersten Brennraums 2 angeordnet.

In dem hier betrachteten Ausführungsbeispiel werden die Brennräume 2 und 35 durch zwei konzentrisch ineinander angeordnete Rohrabschnitte, das heißt durch ein Außenrohr 3 und ein Innenrohr 4 gebildet. Das Außenrohr 3 hat an seiner der Austrittsöffnung 37 gegenüberliegenden Seite ein geschlossenes Ende 38.

Ein Verbrennungsluftrohr 6 mündet exzentrisch versetzt in den zweiten Brennraum 35 und zwar in einem Bereich zwischen dem geschlossenen Ende 38 und dem offenen Ende 5. In diesem Bereich wird ein Flammraum 7 gebildet. Durch das Verbrennungsluftrohr 6 wird ein Einlass für die Verbrennungsluft 39 gebildet. Dieser Einlass befindet sich an dem geschlossenen Ende 38 des zweiten Brennraums 35, d.h. unmittelbar an dem geschlossenen Ende 38 oder in der Nähe des geschlossenen Endes 38.

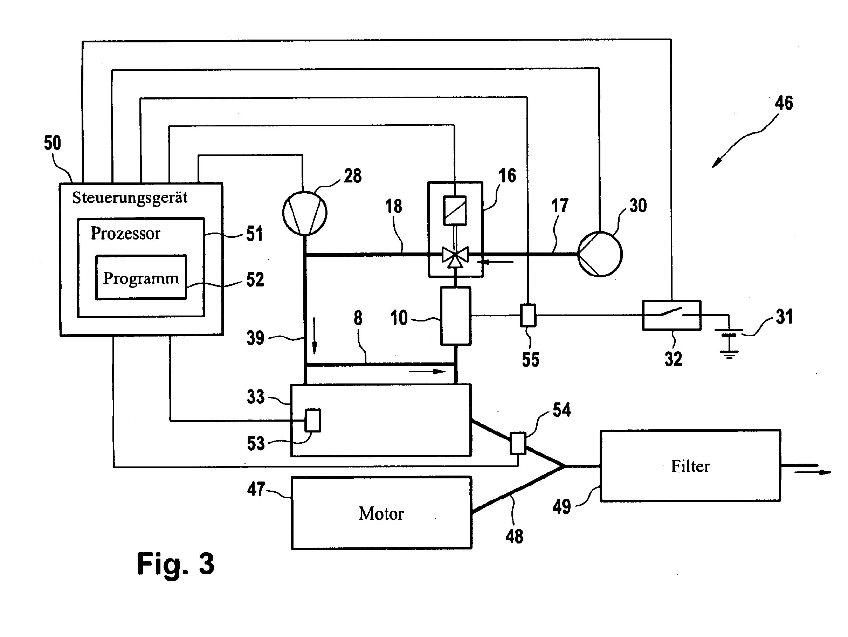

Verbrennungsluft 39 wird über ein Verbrennungsluftgebläse 28 (vgl. Figur 3) durch das Verbrennungsluftrohr 6 in den Flammraum 7 gefördert. Unter "Verbrennungsluft" wird hier ein sauerstoffhaltiges Gas, wie zum Beispiel die Umgebungsluft oder ein anderes sauerstoffhaltiges Gas verstanden.

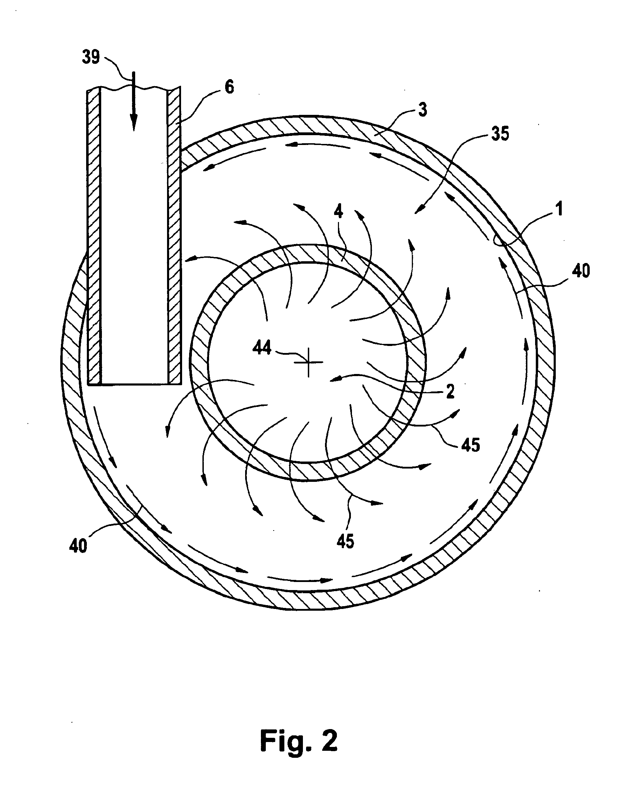

Wenn die Verbrennungsluft 39 über das Verbrennungsluftrohr 6 in den Flammraum strömt, so wird hierdurch ein Luftstrom 40 in Richtung auf die Austrittsöffnung 37 erzeugt. Vorzugsweise verläuft der Luftstrom 40 entlang einer Innenseite einer Wandung 1 des Außenrohrs 3. Vorzugsweise hat der Luftstrom 40 einen Drall um die Längsachse des Außenrohrs 3 und des Innenrohrs 4. Dieser Drall wird durch die exzentrische Einströmung der Verbrennungsluft 39 in den Flammraum 7 über das Verbrennungsluftrohr 6 erzeugt. Dies wird noch mit Bezugnahme auf die Figur 2 näher erläutert.

Der Brenner 33 hat eine Kraftstoffzuführung 41. Die Kraftstoffzuführung 41 dient zur Zuführung eines Kraftstoff-Luft-Gemisches in den ersten Brennraum 2 über einen Kraftstoffeinlaß, der durch eine Mündung 13 des Glühkerzenrohrs 9 gebildet wird. Die Mündung 13 befindet sich an dem geschlossenen Ende 36 des ersten Brennraums 2, d.h. unmittelbar an dem geschlossenen Ende 36 oder in der Nähe des geschlossenen Endes 36.

Hierzu hat die Kraftstoffzuführung 41 ein Glühkerzenrohr 9, das nahe dem geschlossenen Ende 36 in den Brennraum 2 mündet. In der hier betrachteten Ausführungsform ist das Glühkerzenrohr 9 über einen Bypass 8 mit dem Verbrennungsluftrohr 6 verbunden. Über den Bypass 8 kann daher ein Luftstrom 42 in die Kraftstoffzuführung 41 einströmen.

Das Glühkerzenrohr 9 hat einen Abschnitt 43, der durch den Brennraum 35 hindurch zu dem Brennraum 2 verläuft. Dadurch wird das Kraftstoff-Luft-Gemisch durch den Brennraum 35 hindurch zu dem Brennraum 2 gefördert.

Beispielsweise ist das Glühkerzenrohr 9 im Bereich seines Durchtritts durch das Außenrohr 3 mit diesem verschweißt und ebenfalls im Bereich seines Durchtritts mit dem Innenrohr 4 verschweißt und hält so das Innenrohr 4 in dem Außenrohr 3. Durch das Glühkerzenrohr 9 wird also das Innenrohr 4 an dem Außenrohr 3 befestigt. Alternativ oder zusätzlich können weitere Befestigungsmittel zur Befestigung des Innenrohrs 4 in dem Außenrohr 3 vorgesehen sein.

In das Glühkerzenrohr 9 ist eine Flammglühkerze eingesetzt. Hierbei kann es sich um eine handelsübliche Flammglühkerze, beispielsweise des Herstellers BERU handeln, insbesondere dem Typ FR20 24V. Die Flammglühkerze 10 hat einen Kraftstoffkanal 11, der mit einem 3/2 Wegemagnetventil 16 verbunden ist. Über das Magnetventil 16 kann wahlweise Kraftstoff 17 oder Spülluft 18 zum Freiblasen des Kraftstoffkanals 11 in der Flammglühkerze 10 geführt werden.

Der Kraftstoff 17 läuft bei entsprechender Stellung des Magnetventils 16 entlang eines Glühstifts 12 der Flammglühkerze 10 in einen Mischraum 21, der von einem Schutzrohr 19 der Flammglühkerze 10 umgeben ist. Das Schutzrohr 19 hat Löcher 20, über die ein Teil des Luftstroms 42 in den Mischraum 21 gelangen kann. Dort wird dieser Teil des Luftstroms 42 mit dem Kraftstoff 17, der über dem Kraftstoffkanal 11 zu dem Mischraum 41 gelangt, vermischt, so dass ein Kraftstoff-Luft-Gemisch entsteht. Der Kraftstoff 17 bzw. das Kraftstoff-Luft-Gemisch kann durch eine Glühspule 22 der Flammglühkerze 10 gezündet werden.

Das Schutzrohr 19 hat einen etwas kleineren Querschnitt als das Glühkerzenrohr 9, so dass ein Spalt 23 im Bereich des Abschnitts 43 gebildet wird. Ein Teil des Luftstroms 42 strömt nicht über die Löcher 20 in den Mischraum 21, sondern durch den Spalt 23 über den Abschnitt 43 in den Brennraum 2. Durch den Spalt 23 wird ein Kühlkanal zwischen dem Schutzrohr 19 und dem Glühkerzenrohr 9 gebildet. Dieser Teil des Luftstroms 42 kühlt das Glühkerzenrohr 9 und schützt so das Glühkerzenrohr 9 als auch den Schaft der Glühkerze 10 vor Überhitzung.

Der Luftstrom 40 hat aufgrund der exzentrischen Zuführung der Verbrennungsluft 39 über das Verbrennungsluftrohr 6 einen Drall um die Längsachse des Außenrohrs 3 und des Innenrohrs 4. Vorzugsweise ist der Drall so gewählt, dass ein großer Teil des Luftstroms 40 auf das Glühkerzenrohr 9 im Bereich des Abschnitts 43 trifft. Dadurch wird das Glühkerzenrohr 9 zusätzlich stark gekühlt. Ferner wird dadurch der Luftstrom 40 mit dem Brenngas, das in dem Brennraum 2 erzeugt worden ist, verwirbelt. Eine weitere Verwirbelung findet im Bereich der Austrittsöffnung 37 statt, und zwar an dem Anschlussflansch 26 des Brenners 33. Aufgrund der Verwirbelung an dem Abschnitt 43 und an dem Abschlussflansch 26 wird also das Brenngas mit dem Luftstrom 40 vermischt, so dass der bisher unverbrannte Kraftstoff des Brenngases verbrennt.

Durch die exzentrische Einströmung der Verbrennungsluft 39 verläuft der Luftstrom 40 in etwa spiralförmig entlang der Innenseite der Wandung 1 des Außenrohrs 3. Der Luftstrom 40 ist dabei im wesentlichen laminar bis er auf den Abschnitt 43 auftritt. In dem Brennraum 35 strömt also die relativ kühle Verbrennungsluft 39 als Luftstrom 40 entlang der Innenseite der Wandung 1, so dass die Flamme des brennenden Brenngases, welches aus dem Brennraum 2 in den Brennraum 35 gelangt, von der Innenseite der Wandung 1 abgehalten oder "weggeblasen" wird. Dies hat den Vorteil, dass die Wandung 1 des Außenrohrs 3 gekühlt wird, während das Innenrohr 4 durch die Flamme des Brenngases erhitzt wird.

Die Flammglühkerze 10 wird außer durch den Luftstrom 40, der im wesentlichen im Bereich des Abschnitts 43 auf das Glühkerzenrohr 9 auftrifft, durch den Durchfluss und die zumindest teilweise Verdampfung des Kraftstoffs 17 in dem Kraftstoffkanal 11 gekühlt.

An der Innenseite des Brennraums 2, das heißt an der Innenseite des Innenrohrs 4, ist ein Drahtgestrick 24 angeordnet. Beispielsweise ist das Drahtgestrick zwischen dem offenen Ende 5 und der Mündung 13 des Glühkerzenrohrs 9 in dem Brennraum 2 angeordnet. Das Drahtgestrick sollte so eng sein, dass flüssiger Kraftstoff 17 nicht aus dem Brennraum 2 herausgeblasen wird, sondern entlang dem Drahtgestrick 24 durch eine Kapillarwirkung nach oben gezogen wird. Die Platinbeschichtung auf dem Drahtgestrick 24 dient zur Temperaturerhöhung des Innenrohrs 4 während des Brennvorgangs. Dadurch werden beim Herunterfahren des Brenners 33 eventuell noch vorhandene oder entstehende Kraftstoffdämpfe beim Ausblasen der Flammglühkerze 10 katalytisch oxidiert.

Während des Brennvorgangs ist das Magnetventil 16 so geschaltet, dass Kraftstoff 17 über den Kraftstoffkanal 11 der Flammglühkerze 10 in den Mischraum 21 gelangt, wo aufgrund der Vermischung mit einem Teil des Luftstroms 42, der durch die Löcher 20 in dem Mischraum 21 hinein tritt, ein fettes Kraftstoff-Luft-Gemisch entsteht. Dieses gelangt über den Abschnitt 43 des Glühkerzenrohrs 9 in den Brennraum 2. Das resultierende Brenngas tritt durch das offene Ende 5 des Brennraums 2 hindurch in den Flammraum 7. Durch das Verbrennungsluftrohr 6 strömt die Verbrennungsluft 39 in den Brennraum 35, so dass dort der Luftstrom 40 resultiert. Dieser erfasst auch das Brenngas, welches durch das offene Ende 5 des Brennraums 2 in den Brennraum 35 ausströmt. Das Brenngas wird durch Verwirbelung an dem Abschnitt 43 und an dem Anschlussflansch 26 mit dem Luftstrom 40 vollständig verbrannt, wodurch das Heißgas 27 entsteht, welches durch die Austrittsöffnung 37 des Brenners 33 austritt. Der Sauerstofffluss, das heißt der pro Zeiteinheit über die Verbrennungsluft 39 dem Brennraum 35 zugeführte Sauerstoff, ist dabei so eingestellt, dass die Verbrennung des Brenngases in den Brennraum 35 bei einem Sauerstoffüberschuss erfolgt, so dass das Heißgas 27 sauerstoffhaltig ist.

In dem Brennraum 2 verbrennt der Kraftstoff 17 beispielsweise bei einer Temperatur von ca. 500°C bis 600°C unter Sauerstoffmangel. Durch die Kühlung des Außenrohrs 3, insbesondere durch den Luftstrom 40, ist das Außenrohr 3 kühler als das Innenrohr 4. Beispielsweise liegt die Betriebstemperatur des Außenrohrs 3 unter 350°C, vorzugsweise im Bereich zwischen 200°C und 300°C. Beispielsweise beträgt die Betriebstemperatur am geschlossenen Ende 38 ca. 200°C und etwa 300°C im Bereich des Glühkerzenrohrs 9 während die Flammglühkerze 10 selbst eine Temperatur von ca. 40°C hat. Dies ist besonders vorteilhaft zum problemlosen Einbau des Brenners, beispielsweise in das Dieselpartikelfiltersystem eines Kraftfahrzeugs.

Das Heißgas 27 kann je nach der Wahl der Betriebsparameter des Brenners 33 eine Temperatur von bis zu ca. 1400°C haben. Wenn das Heißgas 27 zur Regeneration eines Partikelfilters verwendet werden soll, ist im Allgemeinen eine Temperatur zwischen 400°C und 700°C gewünscht. Zur Oxidation des Rußes in dem Partikelfilter ist es erforderlich, dass das Heißgas 27 einen Sauerstoffanteil hat. Hierzu sollte die Verbrennung des Brenngases in dem Brennraum 35 mit einem Luftverhältnis von λ > 1,5 erfolgen.

Durch die Regelung der Zufuhr des Kraftstoffs 17 kann die Temperatur des Heißgases 27 bei optimaler Einstellung des Luftverhältnisses geregelt werden. Dadurch kann für die Oxidation der Rußpartikel in dem Partikelfilter ein sauerstoffreiches, heißes Gas zur Verfügung gestellt werden.

Beim Betrieb des Brenners kann es aufgrund des Leidenfrost-Effekts zur Ausbildung von Kraftstofftropfen in dem Brennraum 2 kommen. Diese werden von dem Drahtgestrick 24 aufgefangen und dort unter Sauerstoffmangel verbrannt.

Aufgrund der Erhitzung des Innenrohrs 4 kann nach einer Startphase des Brenners 33 die Flammglühkerze 10 abgeschaltet werden, da diese für die Aufrechterhaltung des Brennvorgangs nach der Startphase dann nicht mehr benötigt wird. Dies hat den besonderen Vorteil, dass die Batterie des Kraftfahrzeugs nicht ständig mit dem Betrieb der Flammglühkerze 10 während des Betriebs des Brenners 33 belastet zu werden braucht.

Neben der Startphase wird die Flammglühkerze 10 vorzugsweise auch in der Ausschaltphase des Brenners 33 eingeschaltet, wie weiter unten noch näher erläutert wird.

Die Figur 2 zeigt einen Querschnitt durch den Brenner 33 in der Ausführungsform der Figur 1 im Bereich des Flammraums 7.

Wie in der Figur 2 schematisch dargestellt, wird durch die durch das Verbrennungsluftrohr 6 exzentrisch in den Brennraum 35 eingeleitete Verbrennungsluft 39 der Luftstrom 40 entlang der Innenseite der Wandung 1 bewirkt. Dieser Luftstrom 40 ist im wesentlichen laminar und hat eine rotatorische Richtungskomponente um die Längsachse 44 des Brenners 33 sowie eine translatorische Richtungskomponente in Richtung von dem geschlossenen Ende 38 auf die Austrittsöffnung 37. Insgesamt ergibt sich dadurch ein in etwa spiralförmiger Verlauf des Luftstroms 40, so dass ein möglichst großer Teil des Luftstroms 40 in dem Abschnitt 43 auf das Glühkerzenrohr 9 trifft (vgl. Figur 1). Dies hat unter anderem auch die Folge, dass die Flammglühkerze 10 stark gekühlt wird.

Aus dem Brennraum 2 tritt Brenngas 45 in den Brennraum 35. Dieses Brenngas 45 wird von der in den Brennraum 35 einströmenden Verbrennungsluft erfasst, ohne damit vollständig verwirbelt zu werden, so dass das Brenngas dem Luftstrom 40 folgend ebenfalls in etwa auf einer Spiralbahn rotatorisch und translatorisch in Richtung auf die Austrittsöffnung befördert wird.

Durch den Luftstrom 40 wird das Brenngas 45 von der Wandung 1 weggeblasen, so dass die Flamme des Brenngases nicht die Wandung 1 erreichen kann. Dies hat zur Folge, dass das Innenrohr 4 stärker aufgeheizt wird, als das Außenrohr 3.

Die Figur 3 zeigt eine Ausführungsform eines erfindungsgemäßen Dieselpartikelfiltersystems 46. Elemente der Figur 3, die Elementen der Figuren 1 und 2 entsprechen, sind dabei mit denselben Bezugszeichen bezeichnet.

Der Brenner 33 und ein Dieselmotor 47 sind über ein Y-Rohr 48 mit einem Partikelfilter 49 verbunden. Der Partikelfilter 49 dient zum Ausfiltern von Rußpartikeln aus den Abgasen des Dieselmotors 47. Die von dem Filter 49 ausgefilterten Rußpartikel werden bei Bedarf mit Hilfe des von dem Brenner 33 gelieferten Heißgas 27 verbrannt. Dies kann online, das heißt bei laufendem Dieselmotor 47, oder nach Abschalten des Dieselmotors 47 erfolgen. Zur Regeneration des Partikelfilters 49, das heißt zur Verbrennung der Rußpartikel, wird der Brenner 33 manuell oder automatisch eingeschaltet.

Zur Steuerung und / oder Regelung des Brenners 33 dient ein Steuerungsgerät 50 mit zumindest einem Prozessor 51 zur Ausführung der Programminstruktionen eines Programms 52. Das Steuerungsgerät 50 dient zur Ansteuerung eines Verbrennungsluftgebläses 28, welches die Verbrennungsluft 39 über das Verbrennungsluftrohr 6 (vgl. Figur 1) einbläst. Ferner dient das Steuerungsgerät 50 zur Ansteuerung des Magnetventils 16, einer Dieselförderpumpe 30 und eines Schalters 32.

In der hier betrachteten Ausführungsform wird auch die Spülluft 18 im Bedarfsfall von dem Verbrennungsluftgebläse 28 geliefert, welches hierzu mit einem Eingang des Magnetventils 16 verbunden ist. Der andere Eingang des Magnetventils 16 ist mit der Dieselförderpumpe 30 verbunden, um Kraftstoff 17, in dem hier betrachteten Fall Dieselkraftstoff, zuzuführen. Über den Schalter 32 kann die Flammglühkerze 10 mit einer Spannungsquelle 31 verbunden werden. Bei der Spannungsquelle 31 kann es sich zum Beispiel um eine Autobatterie handeln.

Das Steuerungsgerät 50 kann ferner mit einem Sensor 53, das heißt einem sogenannten Flammwächter, und/oder einem Stromsensor 55 zur Überprüfung der Flammglühkerze 10 verbunden sein. Der Sensor 53 dient zur Feststellung, ob eine Verbrennung des Kraftstoffs stattfindet oder nicht, das heißt, ob der Brenner 33 gezündet hat oder nicht. Der Stromsensor 55 dient zur Feststellung, ob die Flammglühkerze 10 geheizt wird oder wegen eines Defektes ausgefallen ist. Hierdurch kann sichergestellt werden, dass kein Kraftstoff in den Brenner 33 gepumpt wird, wenn dieser in einem Störfall nicht gezündet werden kann oder wenn die Verbrennung erloschen ist. In einem solchen Fall schaltet das Steuerungsgerät 50 die Kraftstoffzuführung ab, in dem die Dieselförderpumpe 30 abgeschaltet wird.

Das Steuerungsgerät kann ferner mit einem Temperatursensor 54 verbunden sein, der die Temperatur des Heißgases 27 vor dem Partikelfilter 49 misst. Das Steuerungsgerät 50 kann die Zuführung von Kraftstoff 17 durch Ansteuerung der Dieselförderpumpe 30 so regeln, dass sich eine gewünschte Temperatur des Heißgases 27 einstellt. Die Soll-Temperatur kann dabei in Abhängigkeit von dem verwendeten Partikelfilter 49 vorgegeben und in dem Steuerungsgerät 50 gespeichert werden. Unterschreitet die durch den Temperatursensor 54 gemessene Ist-Temperatur die Soll-Temperatur, so wird die Förderrate der Dieselförderpumpe 30 so erhöht, dass sich die gewünschte Temperatur des Heißgases 27 einstellt.

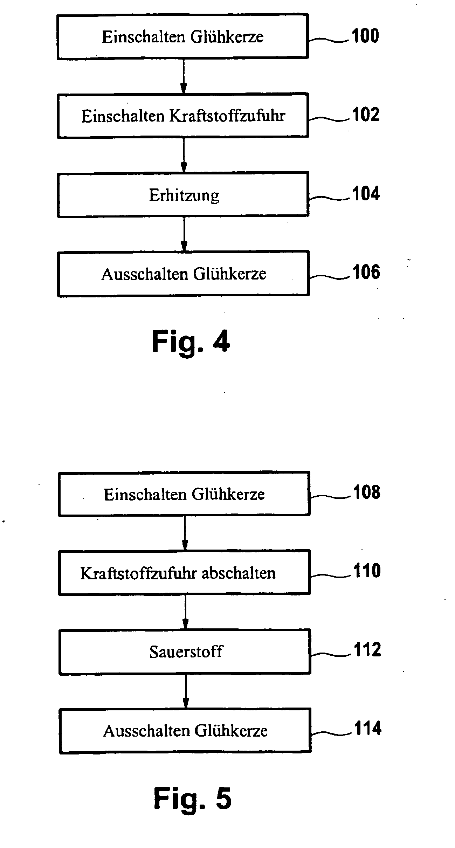

Im weiteren werden verschiedene mögliche Betriebsarten des Dieselpartikelfiltersystems 46 anhand der Figuren 4 bis 6 näher erläutert.

Die Figur 4 zeigt den Startvorgang des Brenners 33 gemäß einer Ausführungsform der Erfindung. In dem Schritt 100 steuert das Steuerungsgerät 50 den Schalter 32 an, um die Flammglühkerze 10 mit der Spannungsquelle 31 zu verbinden. Danach steuert das Steuerungsgerät das Magnetventil 16 und die Dieselförderpumpe 30 an, so dass Kraftstoff über den Kraftstoffkanal 11 in die Flammglühkerze 10 gepumpt wird. Außerdem steuert das Steuerungsgerät 50 das Verbrennungsluftgebläse 28 an, so dass der Luftstrom 40 und der Luftstrom 42 erzeugt werden. Dadurch entsteht in dem Mischraum 21 ein Kraftstoff-Luft-Gemisch, welches durch die Flammglühkerze 10 gezündet wird. In dem Schritt 104 findet daher in dem Brennraum 24 eine Verbrennung dieses Kraftstoff-Luft-Gemisches unter Sauerstoffmangel statt, was zu einer Erhitzung des Innenrohrs 4 führt. Sobald das Innenrohr 4 eine ausreichend hohe Temperatur erreicht hat, wird die Flammglühkerze in dem Schritt 106 von dem Steuerungsgerät 50 durch einen Öffnungsimpuls für den Schalter 32 ausgeschaltet, da die Verbrennung in dem Innenrohr 4 aufgrund dessen Temperatur selbst erhaltend ist. Dies hat insbesondere den Vorteil, dass die Ladung der Spannungsquelle 31 geschont werden kann.

Nach der Startphase erreicht das Innenrohr 4 eine Betriebstemperatur von beispielsweise zwischen 500°C und 600°C. In der Betriebsphase wird der Kraftstoff 17 weiter gefördert. Dies erfolgt je nach dem Typ der Dieselförderpumpe 30 stoßweise oder kontinuierlich. Aufgrund der Temperatur des Innenrohrs 4 und mit Unterstützung des Platin beschichteten Drahtgestricks 24 ist die Verbrennung in dem Innenrohr 4 selbst erhaltend.

Der Kraftstoff 17 läuft in dem Kraftstoffkanal 11 entlang des heißen Glühstifts der Flammglühkerze 10 und verdampft hier bereits teilweise. Dies genügt, um in der Startphase genügend Kraftstoff in der Dampfphase in dem Mischraum 21 zur Zündung der Verbrennung an der Glühspule 22 zu Verfügung zu haben.

In der Startphase verdampft der Kraftstoff 17 in der Flammglühkerze 10 und wird an dem Glühstift entzündet. Dadurch ist die Flamme tiefer in dem Innenrohr 4, was dieses stärker erhitzt. Nach einigen Sekunden ist die Temperatur des Innenrohrs 4 ausreichend hoch, um den geförderten Kraftstoff 17 selbständig ohne Unterstützung der Flammglühkerze 10 zu verdampfen. In der Betriebsphase verdampft der Kraftstoff also erst etwa ab der Mitte bis zum offenen Ende 5 des Innenrohrs 4, so dass die Temperatur des Drahtgestricks 24 sinkt, was den Vorteil hat, dass sich die Lebensdauer der Platinbeschichtung erhöht.

Sowohl in der Startphase als auch in der danach folgenden Betriebsphase, besonders bei hoher Fördermenge von Kraftstoff 17 für die Erzeugung einer hohen Brennerleistung, können sich Tropfen unverdampften Kraftstoffs 17 insbesondere durch Auftreten des Leidenfrost-Phänomens in oder an dem Innenrohr 4 auftreten. Solche Tropfen unverdampften Kraftstoffs 17 werden durch das Drahtgestrick 24 aufgesaugt. Durch die große Oberfläche und hohe Temperatur des Drahtgestricks 24 verdampft und verbrennt der aufgesogene Kraftstoff 17.

Wenn der Brenner 33 mit dem Drahtgestrick 24 ausgeführt ist, lässt sich eine höhere Brennerleistung als ohne Drahtgestrick realisieren. Beispielsweise kann der Brenner 33 ohne das Drahtgestrick bei einer Brennerleistung bis zu 4 kW betrieben werden, wohingegen mit Drahtgestrick 24 wesentlich höhere Brennerleistungen von 30 kW und mehr möglich sind.

Vorzugsweise erfolgt die Einstellung der Brennerleistung allein über die Steuerung der pro Zeiteinheit zugeführten Menge des Kraftstoffs 17. Das Verbrennungsluftgebläse 28 wird in diesem Fall ständig mit voller Leistung betrieben.

In der Ausschaltphase wird zum Ausschalten des Brenners 33 zunächst die Flammglühkerze 10 durch Abgabe eines Steuerungsimpulses von dem Steuerungsgerät 50 zum Schalten des Schalters 32 wieder eingeschaltet. Hierdurch wird die Flammfront im Inneren des Innenrohrs 4 in Richtung auf die Mündung 13 bewegt. Die Temperatur insbesondere des Drahtgestricks 24 wird dabei auf ca. 700°C bis 800°C erhöht. Nach der Temperaturerhöhung wird die Zuführung des Kraftstoffs 17 zum Beispiel durch Abschalten der Dieselförderpumpe 30 durch das Steuerungsgerät 50 abgeschaltet. Das Steuerungsgerät 50 steuert das Magnetventil 16 an, so dass Spülluft 18 zum Einblasen in den Kraftstoffkanal 11 freigegeben wird (Schritte 110, 112). Die Spülluft 18 bläst noch vorhandene Kraftstoffreste in den Mischraum 21 und in den Brennraum 24 und führt sie der Verbrennung an dem Drahtgestrick 24 zu. Eventuell vorhandene Rußbeläge und Verkokungen in der Flammglühkerze 10 werden dadurch beseitigt. Zum Abkühlen des Brenners 33 kann noch für eine gewisse Zeit die Spülluft 18 und gegebenenfalls auch die Verbrennungsluft 39 als zusätzliche Kühlluft eingeblasen werden.

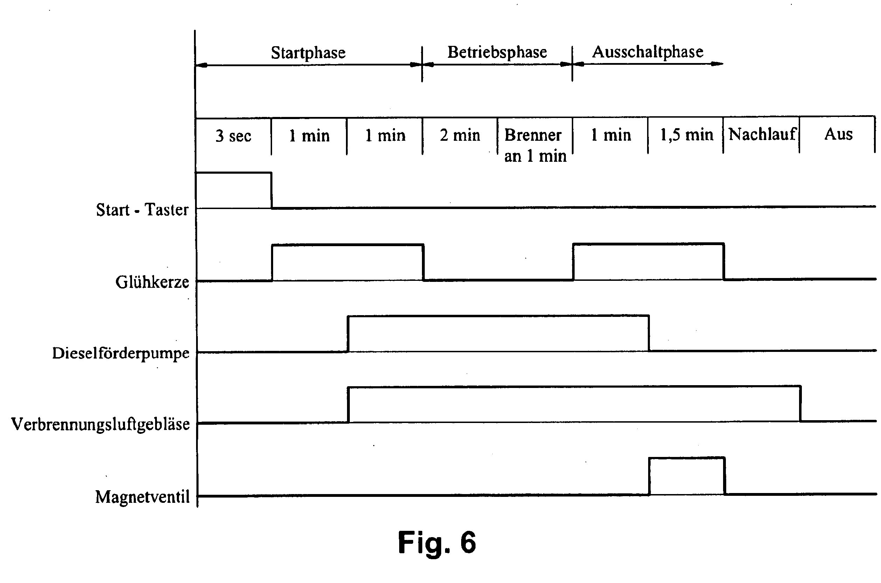

Die Figur 6 zeigt eine Ausführungsform eines entsprechenden Signalplans. Nach Betätigung eines Start-Tasters zum Einschalten des Brenners 33 wird die Flammglühkerze 10 durch den Schalter 32 eingeschaltet. Die Überwachung der Flammglühkerze 10 wird beispielsweise mit dem Stromsensor 55 realisiert. Dieser muss während der Glühphase das Signal logisch Eins liefern, welches anzeigt, dass die Flammglühkerze 10 tatsächlich aufgeheizt wird. Liefert der Stromsensor 55 logisch Null, so liegt ein Störung vor und Kraftstoff 17 wird nicht zugeführt.

Ca. 1 min. nach dem Einschalten der Flammglühkerze 10 werden die Dieselförderpumpe 30 und das Verbrennungsluftgebläse 28 eingeschaltet, so dass Kraftstoff 17 und der Luftstrom 42 zu dem Mischraum 21 gelangt, wo das resultierende KraftstoffLuftgemisch durch die Glühkerze gezündet wird. Vorzugsweise wird das Verbrennungsluftgebläse 28 kurz vor der Dieselförderpumpe 30 eingeschaltet, so dass bereits der Luftstrom 42 zur Verfügung steht, wenn der Kraftstoff 17 den Mischraum 21 erreicht. Nach einer weiteren Minute hat sich das Innenrohr 4 soweit erhitzt, dass die Flammglühkerze 10 durch das Steuerungsgerät 50 abgeschaltet wird. Damit ist die Startphase des Brenners abgeschlossen. Während der nachfolgenden Betriebsphase ist der Brennvorgang in dem Brenner bei weiter laufender Dieselförderpumpe 30 und bei weiter laufendem Verbrennungsluftgebläse 28 selbst erhaltend. Die Erhaltung der Verbrennung wird mit Hilfe des Sensors 53 überprüft. Dieser muss während der Betriebsphase das Signal logisch Eins liefern, welches anzeigt, dass tatsächlich eine Verbrennung in dem Brenner 33 stattfindet. Liefert der Sensor 53 das Signal logisch Null, so liegt ein Fehlerfall vor, und die Zuführung von Kraftstoff 17 wird gestoppt.

Zum Ausschalten des Brenners 33 wird die Flammglühkerze 10 durch das Steuerungsgerät 50 wieder eingeschaltet, insbesondere um die Temperatur des Drahtgestricks 24 zu erhöhen. Ca. eine Minute nach dem Wiedereinschalten der Flammglühkerze 10, wird die Dieselförderpumpe 30 abgeschaltet und das Magnetventil 16 wird so von dem Steuerungsgerät 50 angesteuert, dass nunmehr die Spülluft 18 in den Kraftstoffkanal 11 einströmt. Hierdurch werden Kraftstoffrückstände und Ruß in das Innenrohr 4 geblasen, damit sie dort vollständig verbrannt werden, insbesondere an dem Drahtgestrick 24. Die Flammglühkerze 10 wird nach weiteren ca. 1,5 Minuten ausgeschaltet. Optional kann in einer Nachlaufphase weiter Luft in den Brenner 33 geblasen werden, um diesen abzukühlen.

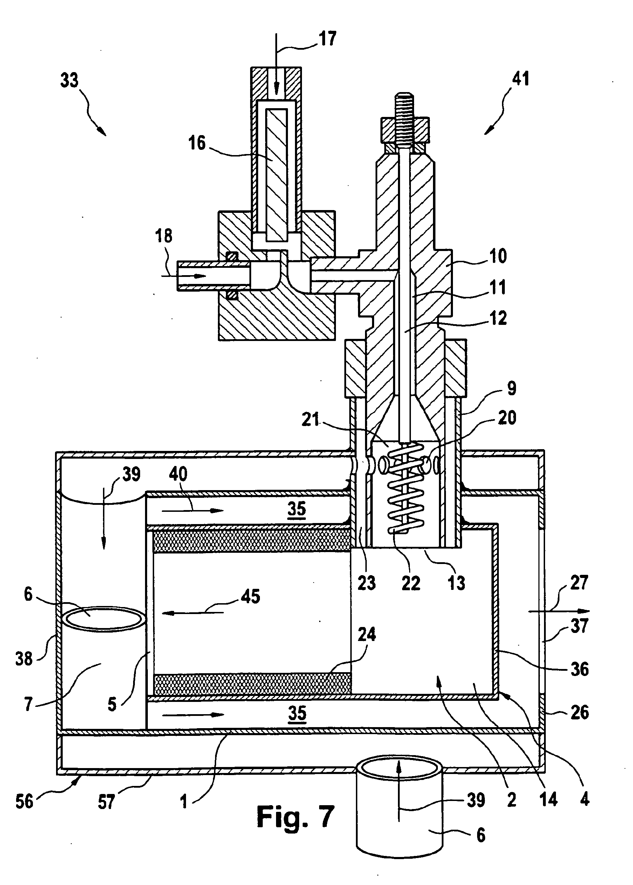

Die Figur 7 zeigt eine weitere Ausführungsform eines erfindungsgemäßen Brenners 33. Bei dieser Ausführungsform hat der Brenner 33 einen Mantel 56, der die ersten und zweiten Brennräume 2, 35 zumindest teilweise umgibt. Die Verbrennungsluft 39 wird über den Mantel 56 zugeführt. Hierzu ist das Verbrennungsluftrohr 6 nicht unmittelbar an der Wandung 1 des Brennraums 35, sondern an dem Mantel 56 angeordnet. Die Verbrennungsluft 39 umströmt daher die Wandung 1 bevor sie in den Flammraum 7 eintritt. Dies hat den Vorteil, dass die Aussenwandung 57, die durch den Mantel 56 gebildet wird, besonders kühl ist.

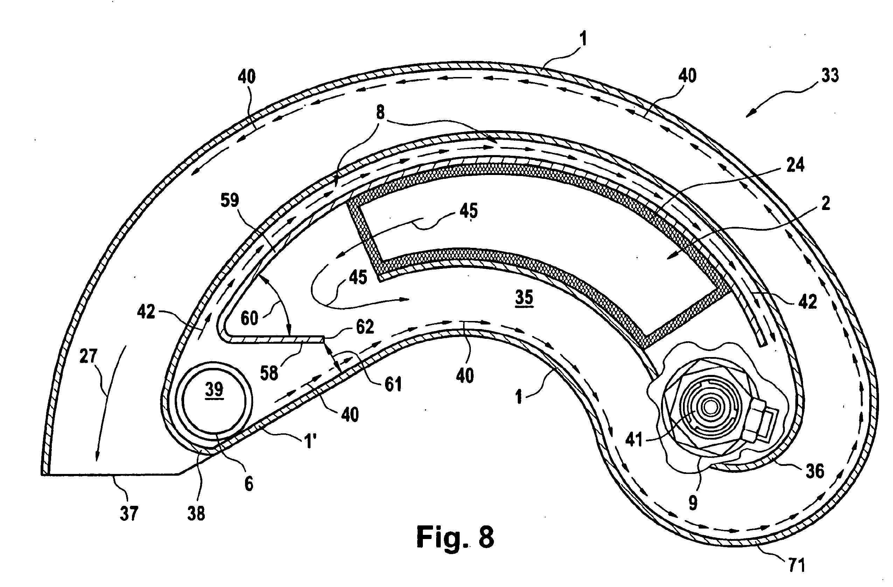

Die Figur 8 zeigt eine weitere Ausführungsform eines erfindungsgemäßen Brenners 33. Bei dieser Ausführungsform werden der Luftstrom 40 und das Brenngas 45 durch die Form des zweiten Brennraums 35 in einen Drall um die Richtung der Kraftstoffzuführung und die der Zuführung von Verbrennungsluft 39 versetzt. Hierzu können ein oder mehrer Strömungsleitelemente 58 an dem offenen Ende 5 des Brennraums 2 angeordnet sein. Die Form des zweiten Brennraums 35 kann dabei in etwa nierenförmig sein, wie in der Figur 8 dargestellt.

Das mindestens eine Strömungselement 58 bildet den in Richtung Verbrennungsluftrohr 6 verlaufenden Endabschnitt der Bypasswand 59. Strömungselement 58 und Bypasswand 59 bilden dabei einen Winkel 60, der bevorzugt im Bereich zwischen 45 grad und 90 grad, besonders bevorzugt zwischen 55 grad und 70 grad liegt. Der Winkel 60 und die Länge des Strömungselementes bestimmen die Größe des Verbrennungsluftspaltes 61, der bevorzugt im Bereich zwischen 5mm und 7mm zwischen dem Wandabschnitt 1'der Wandung 1 des Brenners und dem in Richtung Wandabschnitt 1' zeigenden Ende 62 des Strömungselementes 58 liegt. Bei dem Wandabschnitt 1' handelt es sich um denjenigen Abschnitt der Wandung 1, der gegenüber dem Ende 62 des Strömungselementes 58 liegt. Durch den Verbrennungsluftspalt 61 strömt ein Teil der Verbrennungsluft 39, so dass der Luftstrom 40 entsteht. Der verbleibende Teil der Verbrennungsluft 39 strömt als Luftstrom 42 durch den Bypass 8.

Bei einer vorgegebenen Brennergeometrie kann die Temperatur und der Luftüberschuß des Heißgases 27, bezogen auf eine bestimmte Menge des bei der Kraftstoffzuführung 41 eingebrachten Kraftstoffes 17 (vgl. Fig. 1) durch die Aufteilung des Stromes der Verbrennungsluft 39 in den Bypass 8 und den Luftstrom 40 in den Brennraum 35 über den Winkel 60 eingestellt werden. Je kleiner der Spalt 61 gewählt wird, um so höher ist die Temperatur des Heißgases 27. Als besonders vorteilhaft hat sich ein Bereich des Winkels 60 zwischen 57 grad und 63 grad ergeben. Durch Veränderung des Winkels 60 kann so der Brenner auf die spezifischen Bedingungen zur Regeneration des nachgeschalteten Filters eingestellt werden.

Bei der hier betrachteten Ausführungsform wird der Luftstrom 40 aufgrund einer Biegung 71 der Wandung 1 um z.B. ca. 180 Grad umgelenkt, so dass der Luftstrom 40 nach Passieren der Biegung 71 nicht mehr zu der Richtung, mit der das Brenngas 45 aus dem ersten Brennraum 2 in den zweiten Brennraum 35 austritt, gegenläufig ist. Der Bypass 8 befindet sich aufgrund dieser Geometrie im Inneren des Brenners 33.

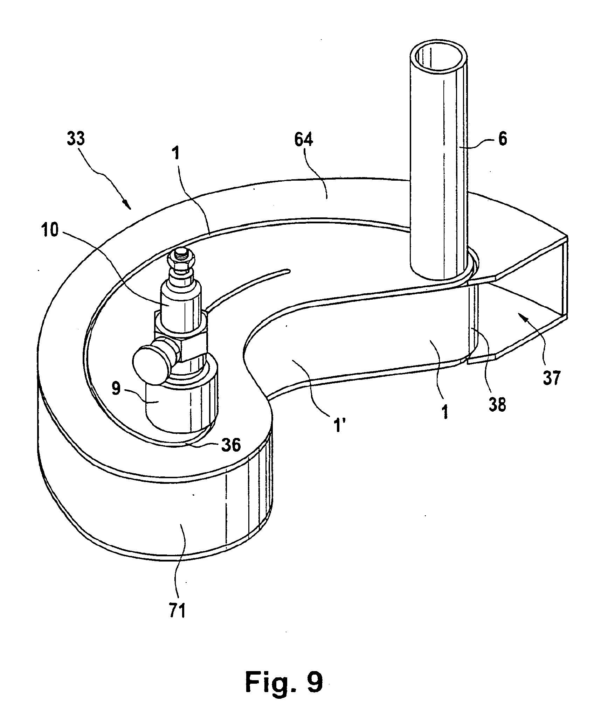

Vorteilhaft bei einem Brenner in der Ausführung nach Figur 8 ist die einfache Herstellbarkeit. Die Wandung 1 wird als fortlaufendes Biegeteil aus Edelstahlblech hergestellt und in, bzw. auf ein Bodenblech 63 aufgeschweißt (wie in Figur 9 dargestellt). Als weiteres Element wird in einem weiteren Arbeitsgang die Bypasswand 59 eingeschweißt, wobei das Strömungselement 58 so eingebracht wird, dass der Winkel 60 veränderbar ist, und so angepasst werden kann. Das Drahtgestrick 24 wird in Brennraum 2 eingelegt, so dass es sich rundum an die vier Wände anlegt. Als Abschluß wird der Deckel 64, der das Verbrennungsluftrohr 6 und das Glühkerzenrohr 9 beinhaltet, aufgeschweißt. Der Brenner ist nun einsatzfähig.

In einer Modifikation der Ausführungsform nach Figur 8 wird an das Strömungsleitelement 58 ein Stellelement, z. B. eine Schraube, angebracht, das durch die Wand 1 im Bereich des Abschnitts 1' nach außen geführt wird und hierüber eine Verstellung des Winkels 60 auch im Betrieb und somit eine laufende Anpassung der Brennereigenschaften, z. B. über eine Reglung des Luftüberschußes des Heißgases 27 mittels einer Lambda-Sonde oder der Temperatur des Heißgases, ermöglicht wird.

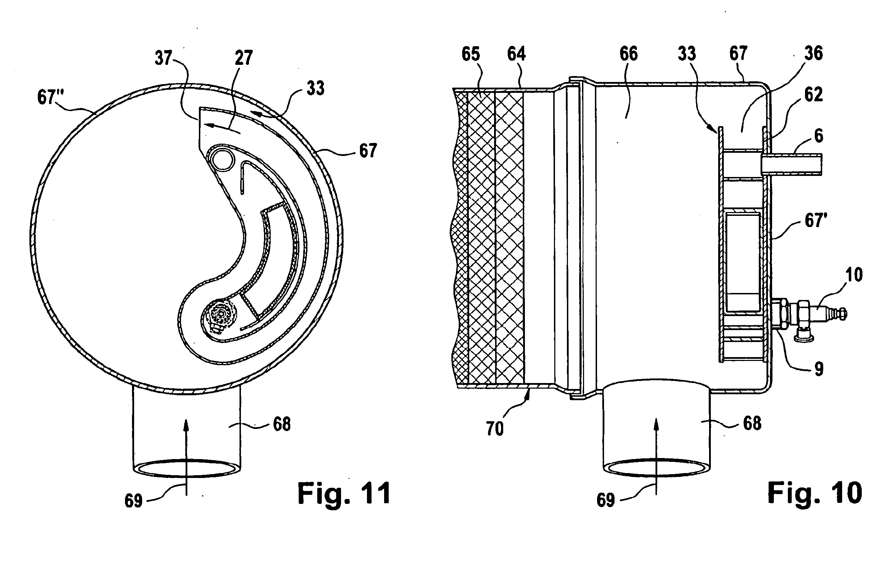

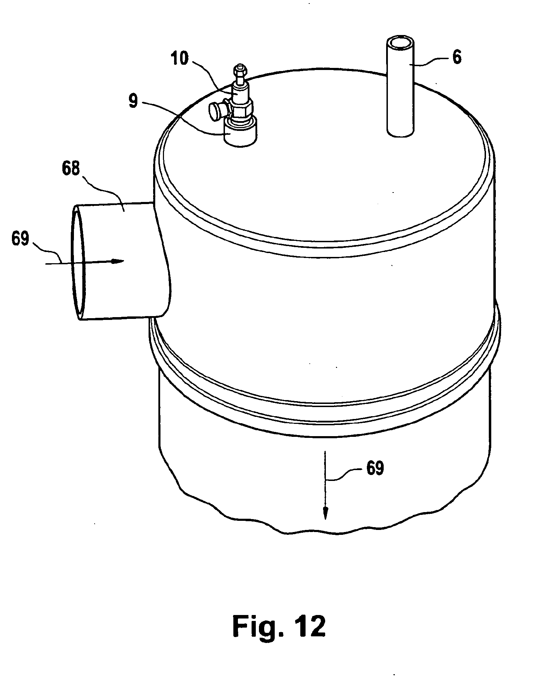

Die Ausführungsform des Brenners nach der Figur 8 zeichnet sich durch ihre Kompaktheit und geringe Bauhöhe aus. Brenner mit einer Bauhöhe von 35 mm wurden erfolgreich betrieben. Durch die Kompaktheit wird es möglich, diesen Brennertyp in das Eingangsmodul eines Filters zu integrieren. Hierdurch wird eine besonders bauraumsparende Konstruktion eines Dieselpartikelfilters mit integriertem Regenerationsbrenner ermöglicht. Neben hoher Zuverlässigkeit in der Regenerationswirkung zeichnet sich eine solche Konstruktion insbesondere durch ihre robuste Bauart und Unempfindlichkeit gegenüber Schwingungen auf. Diese treten insbesondere im harten Einsatz bei Off-Road-Fahrzeugen wie z. B. Baumaschinen auf. Die Figuren 10, 11 und 12 zeigen eine solche Konstruktion.

Durch die nierenförmige Konstruktion des Brenners kann im Eingangsmodul das Abgasrohr mittig platziert werden. Weitere Vorteil des Nierenbrenners im Eingangsmodul ist die dadurch gegebene Abschirmung der entstehenden hohen Oberfächentemperatur beim Brennvorgang.

Figur 10 zeigt einen Schnitt durch den Eingangsbereich eines Dieselpartikelfilters 70. Im Filtergehäuse 64 ist ein Filterpaket 65 eingesetzt, das die Rußpartikel im Abgasstrom 69 herausfiltert. Der Abgasstrom 69 wird über das Abgasrohr 68 in der Wand 67 des Eingangsmoduls 66 in dieses eingeleitet. An der Innenseite der Stirnwand 67'des Eingangsmoduls 66 ist der Brenner 33 angeschweißt. Über die Austrittsöffnung 37 gelangt das Heißgas 27 in das Eingangsmodul 66 und beaufschlagt anschließend das Filterpaket 65, um seine Regenerationswirkung dort zu entfalten. Zum Schutz der Wand 67 des Eingangsmoduls vor der hohen Temperatur des Heißgases 27 können im Bereich des Wandabschnittes 67" ein oder mehrere Schutzbleche angebracht werden oder anders geeignete Wärmeschutzmaßnahmen getroffen werden. Diese sind in Figur 11 der Übersichtlichkeit halber nicht dargestellt.

### Bezugszeichenliste

- 1: Wandung
- 2: Brennraum
- 3: Außenrohr
- 4: Innenrohr
- 5: offenes Ende
- 6: Verbrennungsluftrohr
- 7: Flammraum
- 8: Bypass
- 9: Glühkerzenrohr
- 10: Flammglühkerze
- 11: Kraftstoffkanal
- 12: Glühstift
- 13: Mündung
- 14: Erhitzerbrennraum
- 15: Brenngaskanal
- 16: Magnetventil
- 17: Kraftstoff
- 18: Spülluft
- 19: Schutzrohr
- 20: Löcher
- 21: Mischraum
- 22: Glühspule
- 23: Spalt
- 24: Drahtgestrick
- 26: Anschlussflansch
- 27: Heißgas
- 28: Verbrennungsluftgebläse
- 29: Magnetventil
- 30: Dieselförderpumpe
- 31: Spannungsquelle
- 32: Schalter
- 33: Brenner
- 35: Brennraum
- 36: geschlossenes Ende
- 37: Austrittsöffnung
- 38: geschlossenes Ende
- 39: Verbrennungsluft
- 40: Luftstrom
- 41: Kraftstoffzuführung
- 42: Luftstrom
- 43: Abschnitt
- 44: Längsachse
- 45: Brenngas
- 46: Dieselpartikelfiltersystem
- 47: Dieselmotor
- 48: Y-Rohr
- 49: Partikelfilter
- 50: Steuerungsgerät
- 51: Prozessor
- 52: Programm
- 53: Sensor (Flammenwächter)
- 54: Temperatursensor
- 55: Stromsensor
- 56: Mantel
- 57: Aussenwandung
- 58: Strömungsleitelement
- 59: Bypasswand
- 60: Winkel zw. 58 und 59
- 61: Verbrennungsluftspalt
- 62: Ende des Strömungsleitelements

- 64: Filtergehäuse
- 65: Filterpaket
- 66: Eingangsmodul
- 67: Wand Eingangsmodul
- 67': Stirnwand Eingangmodul
- 68: Abgasrohr

- 69: Abgasstrom
- 70: Dieselpartikelfilter
- 71: Biegung

## Patentansprüche

1. Vorrichtung zur Erzeugung von Heißgas mit:
- einem ersten Brennraum (2) zum Verbrennen von Kraftstoff (17), wobei der erste Brennraum ein offenes (5) und ein geschlossenes Ende (36) aufweist, und wobei der erste Brennraum einen an seinem geschlossenen Ende angeordneten Kraftstoffeinlaß (13) hat,
- einem zweiten Brennraum (35), der den ersten Brennraum zumindest teilweise einhüllt, wobei der zweite Brennraum eine Austrittsöffnung (37) für das Heißgas aufweist, und wobei der zweite Brennraum ein geschlossenes Ende aufweist, an dem ein Einlass für Verbrennungsluft (39) angeordnet ist,
- einer Glühkerze (10),
wobei die Kraftstoffzuführung in der Glühkerze angeordnet ist, wobei der erste Brennraum zur Verdampfung des Kraftstoffs unter Sauerstoffmangel ausgebildet ist, wobei der erste Brennraum zum Verbrennen des Kraftstoffs unter Sauerstoffmangel ausgebildet ist, und
mit Mitteln (6; 28) zur Erzeugung eines ersten Luftstroms (40) in dem zweiten Brennraum (35) in Richtung auf die Austrittsöffnung (37), wobei die Mittel zur Erzeugung des ersten Luftstroms so ausgebildet sind, dass der erste Luftstrom einen Drall aufweist,
wobei die Mittel zur Erzeugung des ersten Luftstroms so ausgebildet sind, dass der erste Luftstrom entlang einer Innenseite einer Außenwandung (1) des zweiten Brennraums verläuft, und mit einer Luftzuführung (6), die exzentrisch versetzt in den zweiten Brennraum mündet, mit einer Kraftstoffzuführung (41) zur Zuführung des Kraftstoffs in den ersten Brennraum, wobei die Kraftstoffzuführung durch den zweiten Brennraum hindurch verläuft, mit einem Bypass (8) zur Abzweigung eines zweiten Luftstroms (42) und einem Mischraum (21) zur Vermischung von zumindest einem Teil des zweiten Luftstroms mit dem Kraftstoff, wobei die Kraftstoffzuführung (41) so ausgebildet ist, dass ein Teil des zweiten Luftstroms (42) durch einen von der Kraftstoffzuführung und dem Mischraum gebildeten Spalt (23) hindurch in den ersten Brennraum strömt.

2. Vorrichtung nach Anspruch 1, wobei die Luftzuführung zwischen dem offenen Ende (5) des ersten Brennraums (2) und dem geschlossenen Ende (38) des zweiten Brennraums in den zweiten Brennraum mündet.

3. Vorrichtung nach einem der vorhergehenden Ansprüche 1 oder 2, mit einem Gestrick (24) im ersten Brennraum.

4. Vorrichtung nach einem der vorhergehenden Ansprüche 1 bis 3, wobei die Mittel zur Erzeugung des ersten Luftstroms so ausgebildet sind, dass das aus der Austrittsöffnung austretende Heißgas sauerstoffhaltig ist.

5. Vorrichtung nach einem der vorhergehenden Ansprüche, mit einem den zweiten Brennraum zumindest teilweise umgebenden Mantel (56) zur Zuführung der Verbrennungsluft zu dem Einlass.

6. Vorrichtung nach einem der vorhergehenden Ansprüche, mit einem Strömungsleitelement (58) für aus dem ersten Brennraum austretendes Brenngas (45), wobei das Strömungsleitelement (58) zwischen einem Verbrennungsluftrohr (6) und dem offenen Ende (5) angeordnet ist, wobei das Strömungsleitelement winkelförmig ist.

7. Vorrichtung nach Anspruch 6, wobei der Winkel einstellbar ist.

8. Dieselpartikelfiltersystem mit
- einem Partikelfilter (49),
- einer Vorrichtung (33) zur Erzeugung von Heißgas nach einem der vorhergehenden Ansprüche.

9. Dieselpartikelfiltersystem nach Anspruch 8, mit einem Temperatursensor (54) zur Sensierung der Temperatur des Heißgases (27) und Mitteln (30, 50, 51, 52) zur Regelung der Zuführung des Kraftstoffs mit der Temperatur als Regelgröße.

10. Dieselpartikelfiltersystem nach Anspruch 8 oder 9, wobei der Partikelfilter und die Vorrichtung eine bauliche Einheit bilden.

11. Verfahren zur Erzeugung von Heißgas (27) mit folgenden Schritten:
- Verbrennung von Kraftstoff (17) unter Sauerstoffmangel in einem ersten Brennraum (2),
- Austritt von Brenngas (45) aus dem ersten Brennraum (2) in einen zweiten Brennraum (35) in eine erste Richtung,
- Erzeugung eines Luftstroms (40) in dem zweiten Brennraum in Richtung auf eine Austrittsöffnung (37) für das Heißgas des zweiten Brennraums, wobei die zweite Richtung der ersten Richtung gegenläufig ist,
wobei sich der erste Brennraum innerhalb des zweiten Brennraums befindet.

12. Verfahren nach Anspruch 11, wobei Kraftstoff (17) in einer Startphase mittels einer Glühkerze (10) entzündet wird und die Glühkerze nach Beendigung der Startphase abgeschaltet wird.

13. Verfahren nach Anspruch 12, wobei die Glühkerze in einer Ausschaltphase eingeschaltet wird, während weiterhin Kraftstoff in den ersten Brennraum zugeführt wird.

## Claims

1. Device for producing hot gas, with:
- a first combustion chamber (2) for burning fuel (17), the first combustion chamber having an open (5) and a closed end (36), and the first combustion chamber having a fuel inlet (13) arranged at its closed end,
- a second combustion chamber (35), which at least partially envelops the first combustion chamber, the second combustion chamber having an outlet opening (37) for the hot gas, and the second combustion chamber having a closed end, at which an inlet for combustion air (39) is arranged,
- a glow plug (10),
the fuel feed being arranged in the glow plug, the first combustion chamber being designed for vaporisation of the fuel with a deficiency of oxygen, the first combustion chamber being designed for combustion of the fuel with a deficiency of oxygen, and with means (6; 28) for producing a first air flow (40) in the second combustion chamber (35) towards the outlet opening (37), the means for producing the first air flow being designed in such a way that the first air flow has a swirl, the means for producing the first air flow being designed in such a way that the first air flow flows along an inner side of an outer wall (1) of the second combustion chamber, and with an air feed (6) which opens with an eccentric offset into the second combustion chamber, with a fuel feed (41) for feeding the fuel into the first combustion chamber, the fuel feed passing through the second combustion chamber, with a bypass (8) for diverting off a second air flow (42), and a mixing chamber (21) for mixing at least part of the second air flow with the fuel, the fuel feed (41) being designed in such a way that part of the second air flow (42) flows into the first combustion chamber through a gap (23) formed by the fuel feed and the mixing chamber.

2. Device according to Claim 1, the air feed opening into the second combustion chamber between the open end (5) of the first combustion chamber (2) and the closed end (38) of the second combustion chamber.

3. Device according to one of the preceding Claims 1 or 2, with a knitted structure (24) in the first combustion chamber.

4. Device according to one of the preceding Claims 1 to 3, the means for producing the first air flow being designed in such a way that the hot gas emerging from the outlet opening contains oxygen.

5. The device according to one of the preceding claims, with a jacket (56) at least partially surrounding the second combustion chamber for the purpose of feeding the combustion air to the inlet.

6. Device according to one of the preceding claims, with a baffle (58) for combustion gas (45) emerging from the first combustion chamber, the baffle (58) being arranged between a combustion air tube (6) and the open end (5), the baffle being angular.

7. Device according to Claim 6, the angle being adjustable.

8. Diesel particulate filter system with
- a particulate filter (49),
- a device (33) for producing hot gas in accordance with one of the preceding claims.

9. Diesel particulate filter system according to Claim 8, with a temperature sensor (54) for sensing the temperature of the hot gas (27) and means (30, 50, 51, 52) for closed-loop control of the feeding of fuel with the temperature as controlled variable.

10. Diesel particulate filter system according to Claim 8 or 9, the particulate filter and the device forming a structural unit.

11. Method for producing hot gas (27) with the following steps:
- combustion of fuel (17) with a deficiency of oxygen in a first combustion chamber (2),
- emergence of combustion gas (45) from the first combustion chamber (2) into a second combustion chamber (35) in a first direction,
- production of an air flow (40) in the second combustion chamber towards an outlet opening (37) for the hot gas of the second combustion chamber, the second direction running counter to the first direction,
the first combustion chamber being situated within the second combustion chamber.

12. Method according to Claim 11, fuel (17) being ignited by means of a glow plug (10) in a starting phase, and the glow plug being switched off on completion of the starting phase.

13. Method according to Claim 12, the glow plug being switched on in a switch-off phase while fuel continues to be fed into the first combustion chamber.

## Revendications

1. Dispositif de production de gaz chaud avec :
une première chambre de combustion (2) pour brûler du carburant (17), la première chambre de combustion comportant une extrémité ouverte (5) et une extrémité fermée (36) et la première chambre de combustion ayant un orifice d'admission de carburant (13) disposé au niveau de son extrémité fermée ;
une deuxième chambre de combustion (35) plongeant au moins en partie dans la première chambre de combustion, la deuxième chambre de combustion comportant une ouverture de sortie (37) pour le gaz chaud et la deuxième chambre de combustion comportant une extrémité fermée au niveau de laquelle un orifice d'admission est disposé pour l'air de combustion (39) ;
une bougie de préchauffage (10) ;
l'alimentation en carburant étant disposée dans la bougie de préchauffage, la première chambre de combustion étant réalisée pour vaporiser le carburant appauvri en oxygène, la première chambre de combustion étant réalisée pour brûler le carburant appauvri en oxygène ; et
avec des moyens (6 ; 28) de production d'un premier courant d'air (40) dans la deuxième chambre de combustion (35) en direction de l'ouverture de sortie (37), les moyens de production du premier courant d'air étant réalisés de telle sorte que le premier courant d'air présente une turbulence, les moyens de production du premier courant d'air étant réalisés de telle sorte que le premier courant d'air s'étend le long d'un côté intérieur d'une paroi extérieure (1) de la deuxième chambre de combustion, et avec une alimentation en air (6) débouchant de façon excentrée dans la deuxième chambre de combustion, avec une alimentation en carburant (41) servant à amener le carburant dans la première chambre de combustion, l'alimentation en carburant traversant la deuxième chambre de combustion, avec un by-pass (8) permettant de diviser un deuxième courant d'air (42) et une chambre de mélange (21) pour mélanger au moins une partie du deuxième courant d'air avec le carburant, l'alimentation en carburant (41) étant réalisée de telle sorte qu'une partie du deuxième courant d'air (42) circule dans la première chambre de combustion en traversant une fente (23) réalisée entre l'alimentation en carburant et la chambre de mélange.

2. Dispositif selon la revendication 1, l'alimentation en air débouchant dans la deuxième chambre de combustion entre l'extrémité ouverte (5) de la première chambre de combustion (2) et l'extrémité fermée (38) de la deuxième chambre de combustion.

3. Dispositif selon l'une quelconque des revendications précédentes 1 ou 2, avec un tissu à mailles (24) dans la première chambre de combustion.

4. Dispositif selon l'une quelconque des revendications précédentes 1 à 3, les moyens de production du premier courant d'air étant réalisés de telle sorte que le gaz chaud sortant de l'ouverture de sortie contient de l'oxygène.

5. Dispositif selon l'une quelconque des revendications précédentes, avec une enveloppe (56) entourant au moins en partie la deuxième chambre de combustion pour amener l'air de combustion à l'orifice d'admission.

6. Dispositif selon l'une quelconque des revendications précédentes, avec un élément de guidage de flux (58) pour guider le gaz de combustion (45) sortant de la première chambre de combustion, l'élément de guidage de flux (58) étant disposé entre un tuyau d'air de combustion (6) et l'extrémité ouverte (5), l'élément de guidage de flux présentant une forme en angle.

7. Dispositif selon la revendication 6, l'angle étant réglable.

8. Système de filtrage de particules diesel avec :
un filtre à particules (49) ;
un dispositif (33) de production de gaz chaud selon l'une quelconque des revendications précédentes.

9. Système de filtrage de particules diesel selon la revendication 8, avec un palpeur de température (54) pour détecter la température du gaz chaud (27) et des moyens (30, 50, 51, 52) de réglage de l'alimentation en carburant utilisant la température comme grandeur de réglage.

10. Système de filtrage de particules diesel selon la revendication 8 ou 9, le filtre à particules et le dispositif formant une unité de construction.

11. Procédé de production de gaz chaud (27) présentant les étapes suivantes :
combustion de carburant (17) appauvri en d'oxygène dans une première chambre de combustion (2) ;
sortie des gaz de combustion (45) hors de la première chambre de combustion (2) dans une première direction, dans une deuxième chambre de combustion (35) ;
production d'un courant d'air (40) dans la deuxième chambre de combustion en direction de l'ouverture de sortie (37) pour le gaz chaud de la deuxième chambre de combustion, la deuxième direction étant opposée à la première direction ;
la première chambre de combustion se trouvant à l'intérieur de la deuxième chambre de combustion.

12. Procédé selon la revendication 11, le carburant (17) étant enflammé lors d'une phase de démarrage au moyen d'une bougie de préchauffage (10) et la bougie de préchauffage étant éteinte à la fin de la phase de démarrage.

13. Procédé selon la revendication 12, la bougie de préchauffage étant allumée dans une phase de déconnexion tandis que du carburant continue d'être introduit dans la première chambre de combustion.
